# EUROPÄISCHE PATENTSCHRIFT

(11) **EP 2 963 323 B1**
(45) Veröffentlichungstag und Bekanntmachung des Hinweises auf die Patenterteilung: **27.12.2017**
(21) Anmeldenummer: 14175334.3
(22) Anmeldetag: 02.07.2014
(51) Int. Cl.: F16L 19/02, F16L 19/028, F16L 27/047, F16L 41/14, F02M 55/00, F02M 21/02

(54) **Verwendung eines Rohrleitungsverbinders zum Führen von Wasserstoffgas sowie Rohrleitungsverbinder mit Wasserstoffgas**
Use of a pipe connector for conveying hydrogen gas and pipe connector with hydrogen gas
Usage d'un raccord de conduites tubulaires pour transporter du gaz hydrogène et raccord de conduites tubulaires avec du gaz hydrogène

(43) Veröffentlichungstag der Anmeldung: 06.01.2016
(73) Patentinhaber: SchmitterGroup AG, 97289 Thüngen (DE)
(72) Erfinder: Schier, Daniel, 97450 Arnstein-Binsfeld (DE)
(74) Vertreter: Götz, Georg Alois

(56) Entgegenhaltungen:
- DE-A1- 1 937 975
- DE-A1- 10 010 944
- DE-A1- 10 143 740
- DE-A1-102007 046 203
- DE-A1-102007 050 203
- DE-C1- 4 407 306
- US-A1- 2012 032 438

## Beschreibung

Die Erfindung betrifft eine Verbindung für Rohrleitungssysteme, speziell eine Vorrichtung zur Verbindung einer Rohrleitung mit einem Gegenstück. Die Rohrleitungssysteme sind zur Führung von Wasserstoffgas ausgelegt. Eine derartige Vorrichtung bzw. Verbindung stellt eine Schnittstelle zwischen einer Rohrleitung und einem Gegenstück dar. Das Gegenstück ist in der Regel ein sogenanntes "Fitting". Das Gegenstück kann ein Einzelteil, aber auch ein Teil eines beliebigen, auch komplexeren Bauteils, z.B. eines Gasverteilers, sein.

Von der Internetseite "http://www.lotzewassertechnik.de/html/de/pe-rohr-anschluesse/pe-fittings-messing/" ist eine entsprechende Vorrichtung in Form eines "Klemmfitting" bekannt. Ein Rohr wird mit Hilfe mehrerer Ringe in einem Fitting angebracht. Nachteilig ist, dass bei der Montage Einzelteile verloren gehen oder in der falschen Reihenfolge oder Richtung verwendet werden können, so dass die Verbindung zwischen Rohr und Fitting nicht wie gewünscht entsteht. Ein weiterer Nachteil ist noch, dass es in einer Verbindung mehrere Dichtflächen gibt (zwischen Schneidring und Rohr und nochmals zwischen Schneidring und Fitting), wodurch das Risiko von Leckagen steigt. Weiterhin ermöglichen diese Verbindungen kein Winkelspiel zwischen Rohrachse und Fittingachse, was in manchen Anwendungen (z. B. in der Kraftfahrzeugtechnik) zunehmend an Bedeutung gewinnt.

Rohrleitungsverbindungen mit Winkelspiel für flüssige Kraftstoffe, wie beispielsweise Diesel-oder Ottokraftstoff sind insbesondere aus den Druckschriften DE 10 2007 046 203 A1, DE 44 07 306 C1, DE 19 37 975 A1, DE 101 43 740 A1 und DE 100 10 944 A1 bekannt. Die DE 10 2007 050 203 A1 offenbart eine Rohrleitung mit einer gasdichten Verschraubung, die eine hohe Schwingungsfestigkeit auch bei einem größeren Winkelversatz ermöglicht. Die Verschraubung umfasst einen Stutzen und ein Gegenstück, wobei die Dichtfläche des Stutzens eine dichte Verbindung mit der Kegel förmigen Dichtfläche des Gegenstücks bildet. Die Druckschrift US 2012/0032438 A1 offenbart eine Rohrleitungsverbindung, die ausdrücklich zum Führen von Wasserstoff vorgesehen ist.

Die Abdichtung zwischen einer Rohrleitung und einem Gegenstück erfolgt dabei mittels einer Lippendichtung aus Kunststoff.

Von Firma Parker (Parker Hannifin GmbH, 41564 Kaarst, Deutschland) sind entsprechende Vorrichtungen in Form sogenannter O-Lok-Verbindungselemente erhältlich, die eine o.g. Verbindung mittels Elastomerdichtung und stirnseitig verpresster Flächen abdichten. Die Verbindungselemente können z. B. in der Wasserstofftechnik verwendet werden. Nachteilig dabei ist der Verlust der Dichtfunktion des Elastomerrings im Zusammenwirken von sehr niedrigen Temperaturen und hohen Drücken (ca. - 40°C/700bar) bei Kontakt mit Wasserstoff.

Aufgabe der Erfindung ist es, eine verbesserte Vorrichtung zur Verbindung einer Rohrleitung mit einem Gegenstück zum Führen von Wasserstoffgas anzugeben.

Die Aufgabe wird gelöst durch eine Verwendung gemäß Patentanspruch 1 sowie eine Vorrichtung gemäß Patentanspruch 14. Die Vorrichtung dient zur Verbindung einer Rohrleitung mit einem Gegenstück. Die Rohrleitung weist einen Endabschnitt auf, der sich an eine erste Auslassöffnung der Rohrleitung anschließt. Im Endabschnitt weist die Rohrleitung eine Verdickung auf. Die Verdickung ist bezüglich ihres Querschnitts gegenüber dem restlichen Endabschnitt erweitert. Die Verdickung weist eine erste Dichtfläche auf. Die erste Dichtfläche umgibt die erste Auslassöffnung der Rohrleitung und weist (zumindest bezüglich einer Komponente der Flächennormalen) zur ersten Auslassöffnung hin. Die erste Dichtfläche weist die Form eines Kegelstumpfes bzw. eines Kegels oder einer Kugelschicht bzw. einer Kugel auf. Die erste Dichtfläche verjüngt sich zur ersten Auslassöffnung hin. Die Rohrleitung ist eine ein Wasserstoffgas führende Rohrleitung und das Gegenstück ist ein das selbe Gas führendes Gegenstück ist, wobei eine sich ergebende Dichtung zwischen erster und zweiter Dichtfläche gasdicht ist. Ein Verlust der Dichtfunktion im Zusammenwirken von sehr niedrigen Temperaturen und hohen Drücken bei Kontakt mit Wasserstoff ist dadurch vermeidbar, dass die erste und zweite Dichtfläche aus Metall bestehen, wobei die Werkstoffauswahl für die Vorrichtung auf das Wasserstoffgas abgestimmt ist.

Das Gegenstück weist eine zweite Dichtfläche auf, die wiederum eine zweite Auslassöffnung des Gegenstücks umgibt. Die zweite Dichtfläche weist die Form eines Konus auf. Erste und zweite Dichtfläche sind derart komplementär zueinander geformt und angeordnet, dass sie im Montagezustand der Vorrichtung nach Art einer Dichtung zusammenwirken. Im Montagezustand taucht die Verdickung zumindest zum Teil in den Konus ein.

Die Verdickung weist weiterhin eine erste Stützfläche auf, die von der ersten Auslassöffnung weg weist. Die erste Stützfläche überragt den Endabschnitt radial, d.h. sie steht in radial auswärtiger Richtung vom Endabschnitt vor. Die Vorrichtung enthält weiterhin ein Klemmmittel. Im Montagezustand greift das Klemmmittel kraftübertragend am Gegenstück und über die erste Stützfläche an der Rohrleitung an, um diese mit ihrer ersten Dichtfläche gegen die zweite Dichtfläche des Gegenstücks zu pressen. Die vom Klemmmittel erzeugte Kraft ist dabei im Wesentlichen in axialer Richtung der durch Rohrleitung und Gegenstück gebildeten Leitung gerichtet. Der Montagezustand ist also derjenige Zustand, in dem die Rohrleitung dichtend mit dem Gegenstück verbunden ist, und beide Bauteile mit Hilfe des Klemmmittels gegeneinander gepresst sind.

Die Rohrleitung und das Gegenstück und damit auch die gesamte Vorrichtung sind erfindungsgemäß solche zur Führung von Wasserstoffgas.

Die Verdickung umgibt insbesondere den Endabschnitt ringförmig, steht also an allen Umfangspositionen der Rohrleitung radial vom Endabschnitt vor bzw. ist gegenüber dem restlichen Endabschnitt ringsum radial erweitert. Das Gegenstück ist insbesondere ein sogenanntes Fitting.

Die Vorrichtung bildet eine Schnittstelle zwischen Rohrleitung und Gegenstück. Das Gegenstück kann zwar ein (loses) Fitting sein, vor allem ist jedoch die Möglichkeit gegeben, das Gegenstück in beliebige Bauteile eines Gasleitungssystems einzuarbeiten. Die Axialrichtung verläuft entlang der Mittellängsachse der Rohrleitung an deren erster Auslassöffnung. Mit anderen Worten werden also Rohrleitung und Gegenstück gegeneinander gedrückt. Im Falle von gasführenden Leitungen ist die sich ergebende Dichtung zwischen erster und zweiter Dichtfläche gasdicht im Sinne einer zulässigen Leckrate. Die vom Klemmmittel erzeugte Klemmkraft bewirkt die eigentliche Abdichtung zwischen Rohrleitung und Gegenstück. Die Klemmkraft kann auch als Vorspannkraft oder (im Falle von Gewinden) Verschraubungskraft genannt werden. Die durch die Vorrichtung geschaffene Verbindung kann mehrfach montiert und demontiert werden, ohne ihre Funktion zu verlieren.

Im Gegensatz zur bekannten Verbindung kommt die erfindungsgemäße Vorrichtung mit mindestens drei Bauteilen aus, nämlich der Rohrleitung mit Verdickung, dem Gegenstück und dem Klemmmittel. Eine entsprechende Vorrichtung kann leicht fehlerfrei montiert werden, da praktisch keine Verwechslungsmöglichkeit von Bauteilen gegeben ist. Auch handelt es sich in der Regel nicht um Kleinteile die leicht verlierbar wären.

In einer bevorzugten Ausführungsform ist die Verdickung durch Umformung der Rohrleitung hergestellt. Mit anderen Worten ist die Verdickung dann Teil der Rohrleitung selbst, also deren einstückiger Bestandteil und kann weder verloren gehen noch falsch aufgesetzt oder angebracht werden. Die Handhabung der Vorrichtung wird dadurch weiter vereinfacht.

Erfindungsgemäß bestehen die erste und die zweite Dichtfläche aus Metall. Das Anpressen zweier metallischer Dichtflächen liefert eine ausreichende Gasdichtheit und vermeidet den Einsatz eines zusätzlichen Dichtmittels, z.B. eines Dichtringes. So können bei der Montage wieder keine Einzelteile vergessen werden. Außerdem enthält die Verbindung damit keine Zwischenelemente, welche vom Wasserstoffgas angegriffen werden könnten.

In einer weiteren bevorzugten Ausführungsform weist auch die zweite Dichtfläche die Form eines Kegelstumpfes oder einer Kugelschicht auf. Durch entsprechend kombinierte Formgebungen von erster und zweiter Dichtfläche ergeben sich so verschiedene Möglichkeiten für bedarfsgerechte Dichtungen, z.B. bezüglich Dichtheits- oder Geometrieanforderungen (Dichtheit bei verschiedenen Neigungswinkeln von Rohrleitung und Gegenstück zueinander, siehe unten).

In einer weiteren bevorzugten Ausführungsform weist auch die erste Stützfläche die Form eines Kegelstumpfes oder einer Kugelschicht auf. Dies bietet z.B. die Möglichkeit, verschiedenen Anforderungen an Montagemöglichkeiten gerecht zu werden. So bietet z.B. eine Kegelform die Möglichkeit zu einer Selbstzentrierung, die Kugelform ermöglicht variable Neigungswinkel zwischen Rohrleitung und Gegenstück. Auch am Klemmmittel kann dann eine entsprechend mit der ersten Stützfläche zusammenwirkende Stützfläche, z.B. in Form eines Konus, Kegelstumpfes oder Kugelschicht angebracht werden.

In einer weiteren bevorzugten Ausführungsform ist das Klemmmittel ein einstückiges Klemmteil, das kraftübertragend unmittelbar am Gegenstück und unmittelbar an der ersten Stützfläche angreift. "Unmittelbar" ist dabei in dem Sinne zu verstehen, dass das Klemmteil alleinig die Kraftübertragung zwischen Gegenstück und Rohrleitung bewirkt oder allenfalls untergeordnete Hilfsteile, wie z.B. Beilagscheiben, Sprengringe usw. im Kraftweg zwischengeschaltet sind. Dabei ergibt sich der Vorteil, dass möglichst wenig Bauteile in der Vorrichtung vorhanden sind. Mit anderen Worten überträgt das Klemmmittel die Vorspannkraft für die Dichtung direkt auf die erste Stützfläche der Rohrleitung.

In einer alternativen Ausführungsform enthält das Klemmmittel ein Klemmteil und zusätzlich eine Distanzhülse, wobei die Distanzhülse eine im Montagezustand zum Klemmteil hin weisende zweite Stützfläche enthält. Im Montagezustand greift das Klemmteil kraftübertragend am Gegenstück und an der zweiten Stützfläche der Distanzhülse an und die Distanzhülse greift kraftübertragend am Klemmteil und an der ersten Stützfläche an. Im Gegensatz zu oben ergibt sich somit ein Kraftweg über zwei Hauptteile, nämlich ausgehend vom Gegenstück zunächst über das Klemmteil, dann über die Distanzhülse schließlich auf die Rohrleitung. Auch hier können optional weitere o.g. Hilfsteile enthalten sein. Durch die Aufteilung des Klemmmittels auf zwei wesentliche Bauteile ergibt sich eine große Variabilität der Vorrichtung. Z.B. können die geometrischen Relativlagen von Dichtflächen, Stützflächen, Schraubgewinden usw. in weiten Bereichen variiert werden. In diesem Fall wird die Vorspannkraft für die Dichtung vom Klemmteil auf die Distanzhülse und von dieser auf die erste Stützfläche der Rohrleitung übertragen.

In einer Variante der eben genannten Ausführungsform weist auch die zweite Stützfläche die Form eines Konus, Kegelstumpfes oder einer Kugelschicht auf. Die oben für die erste Stützfläche genannten Vorteile gelten sinngemäß auch hier.

In einer weiteren bevorzugten Ausführungsform enthält das Klemmmittel ein Klemmteil in Form einer Überwurfmutter oder einer Überwurfschraube. Das Klemmteil weist eine Öffnung auf, die im Montagezustand vom Endabschnitt durchsetzt ist. Ein die Öffnung umgebender Bereich des Klemmteils greift kraftübertragend an der ersten Stützfläche an. Der Angriff erfolgt wie oben erläutert unmittelbar oder unter Zwischenschaltung weiterer kraftübertragender Elemente, beispielsweise der o.g. Distanzhülse. Das Klemmteil greift dadurch kraftübertragend am Gegenstück an, dass ein Gewinde des Klemmteils in ein am Gegenstück angeordnetes Gegengewinde eingreift. Für eine Überwurfschraube ist das Gegengewinde als Innengewinde, für eine Überwurfmutter als Außengewinde realisiert. Überwurfschrauben und -muttern sind Standardbauteile und variantenreich und kostengünstig zu erwerben, was viele Gestaltungsmöglichkeiten der Vorrichtung offen hält und deren Gesamtkosten senkt.

In einer weiteren bevorzugten Ausführungsform der Erfindung enthält das Gegenstück ein Angriffsmittel, an dem das Klemmmittel kraftübertragend angreift. Das Angriffsmittel ist in einer ersten Alternative einstückig mit dem Gegenstück ausgeführt. Ein derartiges Angriffsmittel ist beispielsweise ein Gewindestutzen, welcher das oben genannte Gegengewinde trägt oder ein sonstiges Strukturelement, an welchem das Klemmmittel kraftübertragend, beispielsweise formschlüssig angreifen kann.

In einer alternativen Ausführungsform enthält das Gegenstück ebenfalls ein Angriffsmittel, an dem das Klemmmittel kraftübertragend angreift. Das Angriffsmittel ist jedoch an das Gegenstück gefügt, wobei die Fügestelle außerhalb des medienführenden Weges der Vorrichtung liegt. Dies bietet den Vorteil, dass die Fügestelle selbst nicht mediendicht sein muss, da die Mediendichtheit über die Dichtung der Vorrichtung direkt am medienführenden Weg erfolgt und somit kein Medium an der Fügestelle zurückzuhalten ist.

In einer weiteren bevorzugten Ausführungsform der Erfindung sind erste und zweite Dichtfläche so geformt, dass eine gegenseitige dichtende Anlage für verschiedene Neigungswinkel zwischen Rohrleitung bzw. Endabschnitt und Gegenstück möglich ist. Der Neigungswinkel ist insbesondere der Winkel zwischen der Rohrleitungsachse, also der Mittellängsachse der Rohrleitung an der ersten Auslassöffnung, und der Mittellängsachse des Konus im Gegenstück. Das Klemmmittel weist dann einen Anschlag für den Endabschnitt auf, der mögliche Neigungswinkel, die Rohrleitung und Gegenstück zueinander einnehmen können, auf einen Maximalwinkel begrenzt. Für die Ermöglichung einer Dichtung bei verschiedenen Neigungswinkeln bieten sich beispielsweise die Kombinationen aus Kugelschichten an erster und zweiter Dichtfläche oder einer Kugelschicht an der ersten Dichtfläche und einem Kegelstumpf an der zweiten Dichtfläche an, wobei sich dann ggf. auch die Form einer Kugelschicht für die erste und/oder zweite Stützfläche (gegebenenfalls, also falls die zweite Stützfläche vorhanden ist) anbietet. Entscheidende ist, dass bei den verschiedenen möglichen Neigungswinkeln jeweils keinerlei rückstellende Kräfte auftreten, sondern der betreffende Neigungswinkel bei Anlagen der Vorspannkraft erhalten bleibt. Die Dichtfunktion wird durch Veränderung des Neigungswinkels nicht oder nicht signifikant beeinträchtigt.

In einer bevorzugten Variante dieser Ausführungsform weist das Klemmmittel eine Öffnung auf, die vom Endabschnitt durchsetzt ist. Der Anschlag ist dann durch den Rand der Öffnung gebildet. Der Maximalwinkel ist durch die Differenz der Größen der Querschnitte von Öffnung und Endabschnitt bestimmt. Mit anderen Worten ist der Maximalwinkel dadurch bestimmt, wie viel Spielfreiheit dem (im Querschnitt kleinere) Endabschnitt in der (im Querschnitt größeren) Öffnung zur Verfügung steht.

Gemäß einer weiteren bevorzugten Ausführungsform weisen die erste Dichtfläche und die erste Stützfläche und/oder gegebenenfalls (also falls die zweite Stützfläche vorhanden ist) die erste Dichtfläche und die zweite Stützfläche die Form von Kugelschichten auf und die Mittelpunkte der Kugelschichten fallen zusammen. Mit anderen Worten fallen dann die Mittelpunkte der zu den Kugelschichten gehörenden gedachten Kugeln zusammen. Die genannte Ausführungsform eignet sich insbesondere für die oben genannte Ausführungsform zur dichtenden Anlage der beiden Dichtflächen für verschiedene Neigungswinkel, muss jedoch nicht auf diese beschränkt sein. Jedwede Bewegung der beteiligten Elemente findet dann auf den Kugeloberlächen durch Drehung um den Kugelmittelpunkt statt. Eine bleibende gegenseitige Anlage beteiligter Flächen für verschiedene Drehwinkel ist damit sichergestellt.

Die Aufgabe der Erfindung wird auch gelöst durch die Verwendung der oben erläuterten Vorrichtung zur Verbindung einer Wasserstoffgas führenden Rohrleitung mit einem das Wasserstoffgas führenden Gegenstück gemäß Anspruch 1. Die Verwendung einer entsprechenden Vorrichtung, insbesondere mit zwei metallischen Dichtflächen ohne weitere Zwischenelemente, zur Leitungsverbindung, d.h. das entsprechende Verfahren, vermeidet die o.g. Probleme bei der Verwendung der bekannten Rohrverbinder, insbesondere das einer versagenden Elastomerdichtung in Verbindung mit Wasserstoffgas. Insbesondere ist dabei die Werkstoffauswahl für die Vorrichtung auf das zu führende Wasserstoffgas abgestimmt.

Für eine weitere Beschreibung der Erfindung wird auf die Ausführungsbeispiele der Zeichnungen verwiesen. Es zeigen, jeweils in einer schematischen Prinzipskizze:
Fig. 1 eine erfindungsgemäße Vorrichtung mit Überwurfmutter als einstückigem Klemmteil im Montagezustand,
Fig. 2 eine alternative Vorrichtung mit Überwurfschraube,
Fig. 3 eine alternative Vorrichtung mit Distanzhülse,
Fig. 4 eine alternative Vorrichtung mit einstückigem Klemmteil und konzentrisch kugelförmigen Dicht- und Stützflächen,
Fig. 5 eine alternative Vorrichtung mit Distanzhülse und konzentrisch kugelförmigen Dicht- und Stützflächen

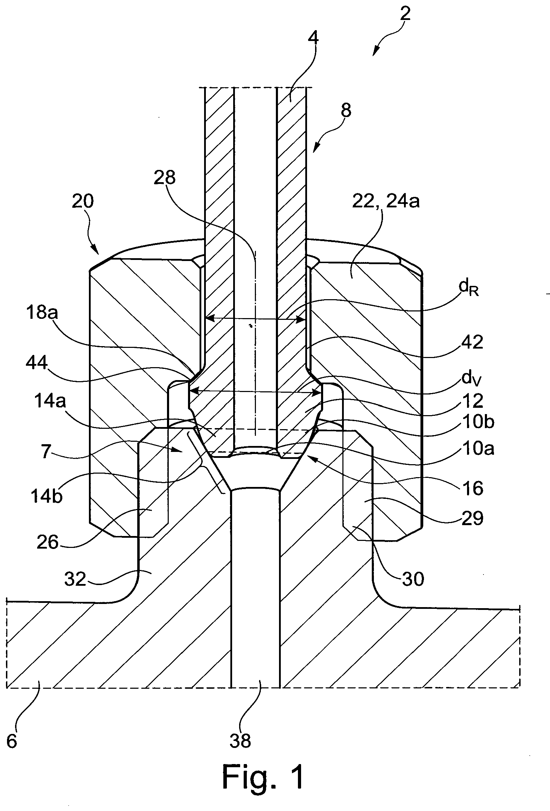

Fig. 1 zeigt eine Vorrichtung 2, welche eine Rohrleitung 4 und ein Gegenstück 6 - hier ein Fitting - enthält, die beide mit Hilfe der Vorrichtung 2 fluiddicht, im vorliegenden Falle gasdicht, miteinander verbunden sind. Im Betrieb dient die Rohrleitung 4 und das Gegenstück 6 der Führung von Gas in Form von Wasserstoffgas. Die Rohrleitung 4 weist einen Endabschnitt 8 auf, welcher sich an eine erste Auslassöffnung 10a der Rohrleitung 4 anschließt. Im Endabschnitt 8 weist die Rohrleitung 4 weiterhin eine Verdickung 12 auf, hier eine einstückig mit der Rohrleitung 4 ausgeführte Anformung. Die Verdickung 12 ist in ihrem Querschnitt, in Fig. 1 - angedeutet durch den maximalen Durchmesser dv - gegenüber dem Querschnitt der restlichen Rohrleitung 4 - angedeutet durch deren Durchmesser d_{R} - radial vorstehend erweitert. Der Durchmesser d_{R} entspricht hierbei dem regulären Durchmesser der gesamten dargestellten Rohrleitung, wenn diese also nicht mit der Verdickung 12 ausgerüstet wäre. Die Verdickung 12 weist eine erste Dichtfläche 14a auf, die die erste Auslassöffnung 10a umgibt und bezüglich ihrer Ausrichtung zur ersten Auslassöffnung hin weist und sich zu dieser hin verjüngt. Im Beispiel weist sie die Form einer Kugelschicht auf, in Fig. 1 angedeutet durch gestrichelte Linien.

Das Gegenstück 6 weist ebenfalls eine zweite Auslassöffnung 10b auf sowie eine zweite Dichtfläche 14b, welche die zweite Auslassöffnung 10b umgibt. Die zweite Dichtfläche 14b weist die Form eines Konus 7 auf, hier in Form eines Kegelstumpfes (in Fig. 1 angedeutet durch eine geschweifte Klammer). Durch die Formgebung als Konus 7 bzw. Kegelstumpf und Kugelschicht sind erste und zweite Dichtfläche 14a,b zueinander komplementär geformt, so dass diese nach Art einer Dichtung 16 zusammenwirken, wenn sie sich mindestens an einer geschlossenen Umfangslinie berühren bzw. aneinander gepresst werden. Fig. 1 zeigt der Montagezustand der Vorrichtung 2, in dem diese Bedingung erfüllt ist. Die Dichtung 16 entspricht dabei also der Berührstelle der beiden Dichtflächen 14a,b. Im gezeigten Montagezustand taucht die Verdickung 12 teilweise in den Konus der zweiten Dichtfläche 14b ein.

Die Verdickung 12 weist außerdem eine erste Stützfläche 18a auf, welche von der ersten Auslassöffnung 10a weg weist, d.h. zur restlichen Rohrleitung 4 hin weist und den Endabschnitt 8 radial auswärts überragt. Die Vorrichtung 2 enthält außerdem ein Klemmmittel 20, hier in Form eines Klemmteils 22 in Form einer Überwurfmutter 24a. Das Klemmmittel 20 greift zum einen durch eine Gewindeverbindung 26 am Gegenstück 6 und zum anderen durch aufstützenden Formschluss an der ersten Stützfläche 18a an, um die Rohrleitung 8 in im Wesentlichen axialer Richtung (also entlang der Mittellängsachse 28 der Rohrleitung 4) mit ihrer ersten Dichtfläche 14a gegen die zweite Dichtfläche 14b des Gegenstücks 6 zu pressen. Im vorliegenden Ausführungsbespiel ist das Klemmmittel 20 als einziges Teil, nämlich als einstückiges Klemmteil 22 ausgeführt, welches kraftübertragend unmittelbar, d.h. ohne Zwischenlage jedweder sonstiger Elemente, am Gegenstück 6 und an der Rohrleitung 4 bzw. deren erster Stützfläche 18a angreift. Bezüglich der Gewindeverbindung 26 besitzt die Überwurfmutter 24a ein Innengewinde 29, welches in ein Gegengewinde 30, hier ein Außengewinde am Gegenstück 6 kraftübertagend eingreift. In der Vorrichtung 2 entsteht so im Montagezustand dank der Dichtung 16 ein medienführender Weg 38, der alleine durch die jeweiligen Innenkanäle der Rohrleitung 4 und des Gegenstückes 6 und durch einen Teil des Konus 7 verläuft. Aus diesem Weg 38 kann geführtes Medium nicht entweichen.

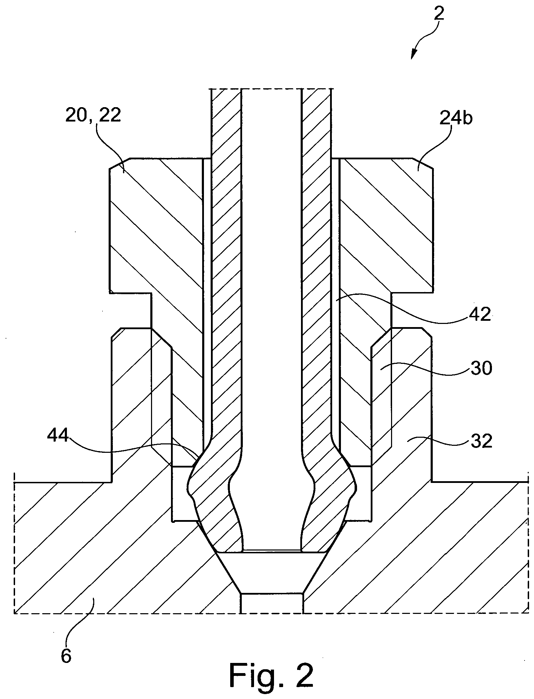

Fig. 2 zeigt eine alternative Ausführungsform einer Vorrichtung 2, bei der das Klemmmittel 20 ebenfalls als einziges und einstückiges Klemmteil 22 ausgeführt ist, hier jedoch in Form einer Überwurfschraube 24b. Das Gegengewinde 30 am Gegenstück 6 ist daher ein Innengewinde, welches in das Außengewinde der Überwurfschraube 24b kraftübertragend eingreift. Für den kraftübertragenden Angriff des Klemmmittels 20 am Gegenstück 6 besitzt das Gegenstück 6 ein Angriffsmittel 32, welches gemäß der Figuren 1 und 2 jeweils ein Gewindestutzen 34 ist, welcher jeweils das Gegengewinde 30 trägt. Gemäß Figur 1 und Figur 2 ist das Angriffsmittel 32 jeweils einstückig mit dem Gegenstück 6 ausgeführt.

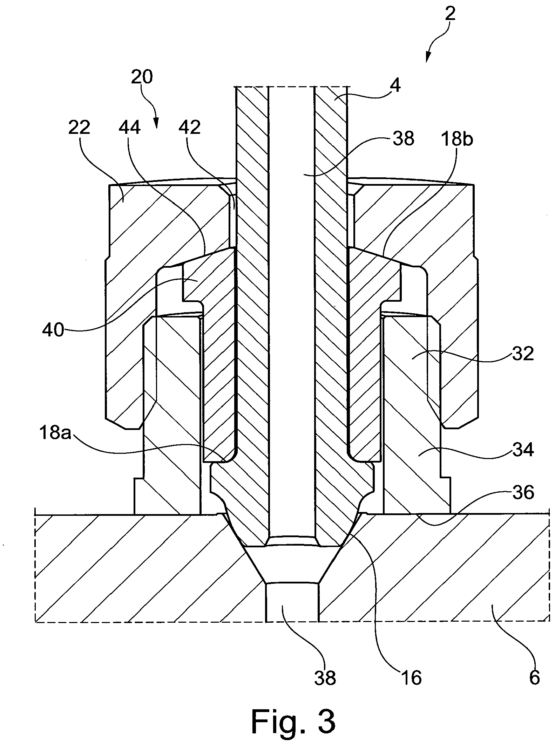

Fig. 3 zeigt eine hierzu alternative weitere Ausführungsform einer Vorrichtung 2, nach welcher das Angriffsmittel 32 zwar auch ein Gewindestutzen 34 ist, dieser jedoch als separates Bauteil an das restliche Gegenstück 6 gefügt ist. Die Fügestelle 36 liegt jedoch aufgrund der Dichtung 16 außerhalb des medienführenden Weges 38 der Vorrichtung 2, weshalb diese nicht mediendicht bezüglich eines durch die Vorrichtung 2 zu führenden Mediums ausgeführt sein muss.

Fig. 3 zeigt außerdem eine Ausführungsform der Erfindung, bei welcher das Klemmmittel 20 zweistückig ausgeführt ist, nämlich in Form eines Klemmteils 22 und einer Distanzhülse 40. Die Distanzhülse 40 weist hierbei eine zweite Stützfläche 18b auf, die im Montagezustand, wie er in sämtlichen Figuren gezeigt ist, zum Klemmteil 22 hin bzw. zu dessen korrespondierender Anlagefläche hin weist. Bei diesem Ausführungsbeispiel greift das Klemmteil 22 zunächst am Gegenstück 6, hier dessen Gewindestutzen 34 sowie an der zweiten Stützfläche 18b der Distanzhülse 40 jeweils kraftübertragend an. Die Distanzhülse 40 wiederum greift über ihre zweite Stützfläche 18b am Klemmteil 22 und weiterhin an der ersten Stützfläche 18a der Verdickung 12 kraftübertragend an. Mit anderen Worten überträgt also die Distanzhülse 40 die Presskraft für die Rohrleitung 4 vom Klemmteil 22 auf die Rohrleitung 4 bzw. deren Verdickung 12. Im gezeigten Beispiel Fig. 3 weist die zweite Stützfläche 18b die Form einer Kugelschicht auf. Die in den Figuren 1-3 gezeigten Überwurfmuttern 24a und Überwurfschrauben 24b besitzen jeweils eine Öffnung 42, welche im gezeigten Montagezustand jeweils vom Endabschnitt 8 durchsetzt ist. Ein die Öffnung 42 umgebender Bereich 44 des Klemmteils 22 greift hier jeweils kraftübertragend an der Stützfläche 18a an. Gemäß der Figuren 1 und 2 geschieht dies direkt, gemäß Figur 3 unter Zwischenschaltung der Distanzhülse 40.

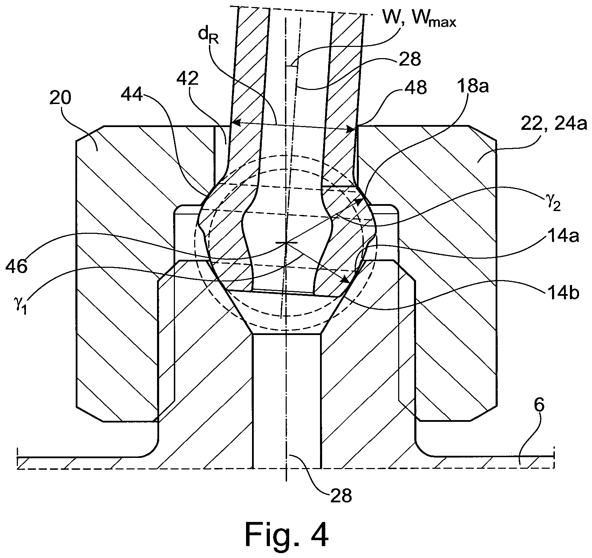

Fig. 4 zeigt nochmals eine Ausführungsform mit einem einzigen Klemmteil 22 als Klemmmittel 20. Bei dieser Ausführungsform weisen sowohl die erste Dichtfläche 14a als auch die erste Stützfläche 18a der Rohrleitung 4 jeweils die Form einer Kugelschicht auf (gestrichelt angedeutet). Die beiden zu den Kugelschichten gehörenden Kugeln besitzen die Radien r₁ für die erste Dichtfläche 14a und r₂ für die erste Stützfläche 18a. Die Mittelpunkte 46 beider Kugeln fallen zusammen. In der Vorrichtung 2 ist damit die Rohrleitung 4 um den Mittelpunkt 46 beliebig (im Rahmen der geometrischen Gegebenheiten) relativ zu dem ortsfest verbleibenden Gegenstück 6 und Klemmteil 22 drehbar. Mit anderen Worten ist ein Neigungswinkel w zwischen den beiden Mittellängsachsen 28 der Rohrleitung 4 und des Gegenstücks 6 (bzw. den entsprechenden Teilen des medienführenden Weges 38) innerhalb gewisser Grenzen veränderbar. Für verschiedene Neigungswinkel w ist hierbei jeweils eine dichtende Anlage zwischen erster und zweiter Dichtfläche 14a,b gewährleistet.

Da es sich bei den entsprechenden Flächen nur um Kugelsegmente und nicht um Vollkugeln handelt ist eine grenzenlose Bewegung schon deshalb nicht möglich. Fig. 4 zeigt, dass die Vorrichtung 2 überdies einen Anschlag 48 aufweist, welcher mögliche einstellbare Neigungswinkel w auf einen Maximalwinkel wₘₐₓ begrenzt. Gemäß Fig. 4 ist der Anschlag 48 über den Durchmesser der Öffnung 42 derart bestimmt, dass sich die Rohrleitung 4 bzw. der Endabschnitt 8 nur innerhalb des Bereichs der Öffnung 42 bewegen kann. Da die Öffnung 42 einen Querschnitt aufweist, welcher größer ist als der Durchmesser d_{R}, kann sich der Endabschnitt 8 innerhalb der Öffnung 42 bewegen. Mit anderen Worten ist der Maximalwinkel wₘₐₓ also durch die Größendifferenz zwischen der Öffnung 42 und dem Endabschnitt 8 vorgegeben.

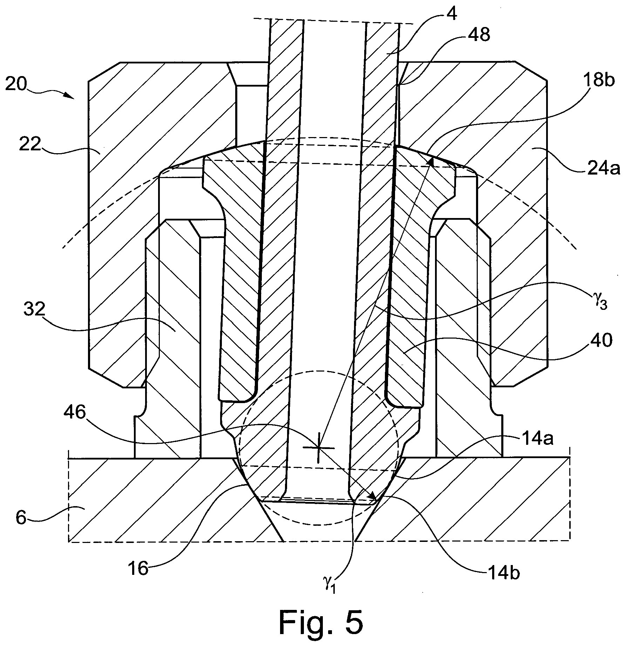

Fig. 5 zeigt die gleiche Ausführungsform wie Fig. 3, jedoch entsprechend Fig. 4 mit verkippter Rohrleitung 4. Hier ist sowohl die erste Dichtfläche 14a der Rohrleitung 4 als auch die zweite Stützfläche 18b der Distanzhülse 40 jeweils nach Art eines Kugelsegments (wieder gestrichelt angedeutet) ausgeführt. Wobei die jeweils zugehörigen Kugeln Radien r₁ und r₃ aufweisen und wieder einen gemeinsamen Mittelpunkt 46 besitzen. In diesem Fall ist dann die Rohrleitung 4 zusammen mit der Distanzhülse 40 (sitzt hier im Wesentlichen passgenau auf dem Endabschnitt 8) um den Mittelpunkt 46 bezüglich der restlichen Anordnung, nämlich des Gegenstücks 6 zusammen mit seinem Angriffsmittel 32 und Klemmteil 22 drehbar. Mit anderen Worten ist also das Klemmmittel 20 selbst variabel bzw. in sich beweglich ausgeführt. In jeder Drehposition, die der Anschlag 48 ermöglicht, ist eine dichte Anlage der ersten Dichtfläche 14a an der zweiten Dichtfläche 14b gewährleistet.

In einer nicht dargestellten Variante dieser Ausführungsform verbleibt die Distanzhülse 40 bei einer Bewegung der Rohrleitung 4 relativ zum Klemmteil 22 ortsfest, d.h. wird nicht mit verschwenkt. Dann ist wie in Fig. 4 die erste Stützfläche 18a nach Art einer Kugelschicht mit gemeinsamem Mittelpunkt 46 geformt und die Distanzhülse 40 besitzt eine größere Bohrung, in der sich der Endabschnitt bewegen kann. Die zweite Stützfläche 18b ist dann z.B. nach Art eines Kegelstumpfes geformt, um im Klemmteil 22 zentriert zu sein.

Gemäß der Ausführungsformen zu Figur 4 und Figur 5 ist es also möglich, durch z.B. leichtes Lösen der Überwurfmutter 24a eine gleitende, d.h. praktisch spielfreie Rotation der kugelförmigen Flächen aneinander zu ermöglichen, um die gewünschte Relativlage zueinander einstellen zu können und anschließend lediglich die Überwurfmutter 24a wieder bei unveränderter Relativlage von Rohrleitung 4 und Gegenstück 6 festzuziehen, um die Dichtung 16 mit Druck zu beaufschlagen und somit eine Abdichtung zu schaffen.

### Bezugszeichenliste

2 Vorrichtung
4 Rohrleitung
6 Gegenstück
7 Konus
8 Endabschnitt
10a,b erste, zweite Auslassöffnung
12 Verdickung
14a,b erste, zweite Dichtfläche
16 Dichtung
18a,b erste, zweite Stützfläche
20 Klemmmittel
22 Klemmteil
24a,b Überwurfmutter, -schraube
26 Gewindeverbindung
28 Mittellängsachse
29 Gewinde
30 Gegengewinde
32 Angriffsmittel
34 Gewindestutzen
36 Fügestelle
38 Weg
40 Distanzhülse
42 Öffnung
44 Bereich
46 Mittelpunkt
48 Anschlag

d_{V,R} Durchmesser
r_{1,2} Radius
w, wₘₐₓ Maximalwinkel

## Patentansprüche

1. Verwendung einer Vorrichtung (2) zur Verbindung einer Rohrleitung (4) mit einem Gegenstück (6) zum Führen von Wasserstoffgas, welche Vorrichtung (2) einen Endabschnitt (8) der Rohrleitung (4) und das Gegenstück (6) umfasst, wobei
- die Rohrleitung (4) in dem Endabschnitt (8), der sich an eine erste Auslassöffnung (10a) der Rohrleitung (4) anschließt, eine Verdickung (12) aufweist, die im Querschnitt (dv) gegenüber dem restlichen Endabschnitt (8) erweitert ist,
- die Verdickung (12) eine die erste Auslassöffnung (10a) umgebende erste Dichtfläche (14a) aufweist, die zur ersten Auslassöffnung (10a) hin weist und die die Form eines Kegelstumpfes oder einer Kugelschicht aufweist und sich zur ersten Auslassöffnung (10a) hin verjüngt,
- das Gegenstück (6) eine deren zweite Auslassöffnung (10b) umgebende zweite Dichtfläche (14b) aufweist, die die Form eines Konus (7) aufweist, wobei erste (14a) und zweite Dichtfläche (14b) derart komplementär zueinander geformt und angeordnet sind, dass diese nach Art einer Dichtung (16) zusammenwirken, und dass die Verdickung (12) zumindest zum Teil in den Konus (7) eintaucht,
- die Verdickung (12) eine erste Stützfläche (18a) aufweist, die von der ersten Auslassöffnung (10a) weg weist und die den Endabschnitt (8) radial überragt,
- die Vorrichtung (2) ein Klemmmittel (20) enthält, das kraftübertragend am Gegenstück (6) und an der ersten Stützfläche (18a) angreift, um die Rohrleitung (4) in im wesentlichen axialer Richtung mit ihrer ersten Dichtfläche (14a) gegen die zweite Dichtfläche (14b) des Gegenstücks (6) zu pressen, wobei eine sich ergebende Dichtung zwischen erster (14a) und zweiter Dichtfläche (14b) gasdicht ist und ein Verlust der Dichtfunktion im Zusammenwirken von sehr niedrigen Temperaturen und hohen Drücken bei Kontakt mit dem Wasserstoffgas dadurch vermeidbar ist, dass die erste (14a) und zweite Dichtfläche (14b) aus Metall bestehen, wobei die Werkstoffauswahl für die Vorrichtung auf das Wasserstoffgas abgestimmt ist.

2. Verwendung einer Vorrichtung (2) nach Anspruch 1, bei der die Verdickung (12) durch Umformung der Rohrleitung (4) hergestellt ist.

3. Verwendung einer Vorrichtung (2) nach einem der vorhergehenden Ansprüche, bei der die zweite Dichtfläche (14b) die Form eines Kegelstumpfes oder einer Kugelschicht aufweist.

4. Verwendung einer Vorrichtung (2) nach einem der vorhergehenden Ansprüche, bei der die erste Stützfläche (18a) die Form eines Kegelstumpfes oder einer Kugelschicht aufweist.

5. Verwendung einer Vorrichtung (2) nach einem der Ansprüche 1 bis 4, bei der das Klemmmittel (20) ein einstückiges Klemmteil (22) ist, das kraftübertragend unmittelbar am Gegenstück (6) und an der ersten Stützfläche (18a) angreift.

6. Verwendung einer Vorrichtung (2) nach einem der Ansprüche 1 bis 4, bei der
- das Klemmmittel (20) ein Klemmteil (22) und eine Distanzhülse (40) mit einer zum Klemmteil (22) hin weisenden zweiten Stützfläche (18b) enthält,
- und das Klemmteil (22) kraftübertragend am Gegenstück (6) und an der zweiten Stützfläche (18b) angreift,
- und die Distanzhülse (40) kraftübertragend am Klemmteil (22) und an der ersten Stützfläche (18a) angreift.

7. Verwendung einer Vorrichtung (2) nach Anspruch 6, bei der die zweite Stützfläche (18b) die Form eines Konus, eines Kegelstumpfes oder einer Kugelschicht aufweist.

8. Verwendung einer Vorrichtung (2) nach einem der vorhergehenden Ansprüche, bei der
- das Klemmmittel (20) als Klemmteil (22) eine Überwurfmutter (24a) oder Überwurfschraube (24b) mit einer Öffnung (42) aufweist, die vom Endabschnitt (8) durchsetzt ist,
- wobei ein die Öffnung (42) umgebender Bereich (44) des Klemmteils (22) kraftübertragend an der ersten Stützfläche (18a) angreift,
- und das Klemmteil (22) vermittels eines Gewindes (29), das in ein am Gegenstück (6) angeordnetes Gegengewinde (30) eingreift, kraftübertragend am Gegenstück (6) angreift.

9. Verwendung einer Vorrichtung (2) nach einem der Ansprüche 1 bis 8, bei der
- das Gegenstück (6) ein Angriffsmittel (32) enthält, an dem das Klemmmittel (20) kraftübertragend angreift,
- und das Angriffsmittel (32) einstückig mit dem Gegenstück (6) ausgeführt ist.

10. Verwendung einer Vorrichtung (2) nach einem der Ansprüche 1 bis 8, bei der
- das Gegenstück (6) ein Angriffsmittel (32) enthält, an dem das Klemmmittel (20) kraftübertragend angreift,
- und das Angriffsmittel (32) an das Gegenstück (6) gefügt ist, wobei die Fügestelle (36) außerhalb des medienführenden Weges (38) der Vorrichtung (2) liegt.

11. Verwendung einer Vorrichtung (2) nach einem der vorhergehenden Ansprüche, bei der
- die erste (14a) und zweite Dichtfläche (14b) so geformt sind, dass eine gegenseitige dichtende Anlage für verschiedene Neigungswinkel (w) zwischen dem Endabschnitt (8) und dem Gegenstück (6) möglich ist,
- wobei das Klemmmittel (20) einen Anschlag (48) für den Endabschnitt (8) aufweist, der mögliche Neigungswinkel (w) auf einen Maximalwinkel (wₘₐₓ) begrenzt.

12. Verwendung einer Vorrichtung (2) nach Anspruch 11, bei der
- das Klemmmittel (20) eine Öffnung (42) aufweist, die vom Endabschnitt (8) durchsetzt ist,
- wobei der Anschlag (48) durch den Rand der Öffnung (42) gebildet ist und der Maximalwinkel (wₘₐₓ) durch die Differenz der Größen der Öffnung (42) und des Endabschnittes (8) bestimmt ist.

13. Verwendung einer Vorrichtung (2) nach einem der vorhergehenden Ansprüche, bei der
- die erste Dichtfläche (14a) und die erste Stützfläche (18a)
- und/oder gegebenenfalls die erste Dichtfläche (14a) und die zweite Stützfläche (18b)
- die Form von Kugelschichten aufweisen und die Mittelpunkte (46) der Kugelschichten zusammenfallen.

14. Vorrichtung (2) zur Verbindung einer Rohrleitung (4) mit einem Gegenstück (6), welche Vorrichtung (2) einen Endabschnitt (8) der Rohrleitung (4) und das Gegenstück (6) umfasst, wobei
- die Rohrleitung (4) in dem Endabschnitt (8), der sich an eine erste Auslassöffnung (10a) der Rohrleitung (4) anschließt, eine Verdickung (12) aufweist, die im Querschnitt (dv) gegenüber dem restlichen Endabschnitt (8) erweitert ist,
- die Verdickung (12) eine die erste Auslassöffnung (10a) umgebende erste Dichtfläche (14a) aufweist, die zur ersten Auslassöffnung (10a) hin weist und die die Form eines Kegelstumpfes oder einer Kugelschicht aufweist und sich zur ersten Auslassöffnung (10a) hin verjüngt,
- das Gegenstück (6) eine deren zweite Auslassöffnung (10b) umgebende zweite Dichtfläche (14b) aufweist, die die Form eines Konus (7) aufweist, wobei erste (14a) und zweite Dichtfläche (14b) derart komplementär zueinander geformt und angeordnet sind, dass diese nach Art einer Dichtung (16) zusammenwirken, und dass die Verdickung (12) zumindest zum Teil in den Konus (7) eintaucht,
- die Verdickung (12) eine erste Stützfläche (18a) aufweist, die von der ersten Auslassöffnung (10a) weg weist und die den Endabschnitt (8) radial überragt,
- die Vorrichtung (2) ein Klemmmittel (20) enthält, das kraftübertragend am Gegenstück (6) und an der ersten Stützfläche (18a) angreift, um die Rohrleitung (4) in im wesentlichen axialer Richtung mit ihrer ersten Dichtfläche (14a) gegen die zweite Dichtfläche (14b) des Gegenstücks (6) zu pressen,
**dadurch gekennzeichnet, dass**
die Rohrleitung (4) und das Gegenstück (6) ein Wasserstoffgas umfassen, wobei eine sich ergebende Dichtung zwischen erster (14a) und zweiter Dichtfläche (14b) gasdicht ist und ein Verlust der Dichtfunktion im Zusammenwirken von sehr niedrigen Temperaturen und hohen Drücken bei Kontakt mit dem Wasserstoffgas dadurch vermeidbar ist, dass die erste (14a) und zweite Dichtfläche (14b) aus Metall bestehen, wobei die Werkstoffauswahl für die Vorrichtung auf das Wasserstoffgas abgestimmt ist.

## Claims

1. The use of a device (2) for connecting a pipeline (4) to a counter piece (6) for the conveyance of hydrogen gas, which device (2) comprises an end portion (8) of the pipeline (4) and the counter piece (6),
- the pipeline (4) having a thickening (12) in the end portion (8) which adjoins a first outlet opening (10a) of the pipeline (4), which thickening has a cross-section (dv) which is extended with respect to the remaining end portion (8),
- the thickening (12) having a first sealing surface (14a) surrounding the first outlet opening (10a), which first sealing surface points towards the first outlet opening (10a) and is in the form of a truncated cone or a spherical layer and tapers towards the first outlet opening (10a),
- the counter piece (6) having a second sealing surface (14b) that surrounds its second outlet opening (10b), which second sealing surface is in the form of a cone (7), the first (14a) and the second sealing surface (14b) being formed complementarily to one another and being arranged such that they interact in the manner of a seal (16), and such that the thickening (12) plunges at least partially into the cone (7),
- the thickening (12) having a first support surface (18a) which points away from the first outlet opening (10a) and which projects radially over the end portion (8),
- the device (2) containing a clamping means (20) which engages onto the counter piece (6) and onto the first support surface (18a) such as to transfer force in order to press the pipeline (4) substantially in the axial direction with its first sealing surface (14a) against the second sealing surface (14b) of the counter piece (6), a resulting seal between the first (14a) and the second sealing surface (14b) being gastight and a loss of the sealing function being avoidable in interaction with very low temperatures and high pressures upon contact with the hydrogen gas by the first (14a) and the second sealing surface (14b) being made of metal, the choice of material for the device being matched to the hydrogen gas.

2. The use of a device (2) according to Claim 1, wherein the thickening (12) is produced by re-shaping the pipeline (4).

3. The use of a device (2) according to any of the preceding claims, wherein the second sealing surface (14b) is in the form of a truncated cone or a spherical layer.

4. The use of a device (2) according to any of the preceding claims, wherein the first support surface (18a) is in the form of a truncated cone or of a spherical layer.

5. The use of a device (2) according to any of Claims 1 to 4, wherein the clamping means (20) is a one-piece clamping part (22) which engages directly onto the counter piece (6) and onto the first support surface (18a) such as to transfer force.

6. The use of a device (2) according to any of Claims 1 to 4, wherein
- the clamping means (20) includes a clamping part (22) and a spacer sleeve (40) with a second support surface (18b) pointing towards the clamping part (22),
- and the clamping part (22) engages onto the counter piece (6) and onto the second support surface (18b) such as to transfer force,
- and the spacer sleeve (40) engages onto the clamping part (22) and onto the first support surface (18a) such as to transfer force.

7. The use of a device (2) according to Claim 6, wherein the second support surface (18b) is in the form of a cone, a truncated cone or a spherical layer.

8. The use of a device (2) according to any of the preceding claims, wherein
- the clamping means (20), as a clamping part (22), has a cap nut (24a) or a cap screw (24b) with an opening (42) through which the end portion (8) passes,
- a region (44) of the clamping part (22) surrounding the opening (42) engaging onto the first support surface (18a) such as to transfer force,
- and the clamping part (22) engaging on the counter piece (6) such as to transfer force by means of a thread (29) which engages in a mating thread (30) disposed on the counter piece (6).

9. The use of a device (2) according to any of Claims 1 to 8 wherein
- the counter piece (6) includes an engaging means (32) onto which the clamping means (20) engages such as to transfer force,
- and the engaging means (32) is made in one piece with the counter piece (6).

10. The use of a device (2) according to any of Claims 1 to 8, wherein
- the counter piece (6) includes an engaging means (32) onto which the clamping means (20) engages such as to transfer force,
- and the engaging means (32) is joined to the counter piece (6), the joint (36) lying outside of the medium-conveying path (38) of the device (2).

11. The use of a device (2) according to any of the preceding claims, wherein
- the first (14a) and the second sealing surface (14b) are formed so that mutually sealing contact is possible for various angles of inclination (w) between the end portion (8) and the counter piece (6),
- the clamping means (20) having a stop (48) for the end portion (8) which limits the possible angle of inclination (w) to a maximum angle (wₘₐₓ).

12. The use of a device (2) according to Claim 11, wherein
- the clamping means (20) has an opening (42) through which the end portion (8) passes,
- the stop (48) being formed by the edge of the opening (42) and the maximum angle (wₘₐₓ) being determined by the difference in the sizes of the opening (42) and the end portion (8).

13. The use of a device (2) according to any of the preceding claims, wherein
- the first sealing surface (14a) and the first support surface (18a)
- and/or optionally the first sealing surface (14a) and the second support surface (18b)
- are in the form of spherical layers and the centre points (46) of the spherical layers coincide.

14. A device (2) for connecting a pipeline (4) to a counter piece (6), which device (2) comprises an end portion (8) of the pipeline (4) and the counter piece (6),
- the pipeline (4) having a thickening (12) in the end portion (8) which adjoins a first outlet opening (10a) of the pipeline (4), which thickening has a cross-section (dv) which is extended with respect to the remaining end portion (8),
- the thickening (12) having a first sealing surface (14a) surrounding the first outlet opening (10a), which first sealing surface points towards the first outlet opening (10a) and is in the form of a truncated cone or a spherical layer and tapers towards the first outlet opening (10a),
- the counter piece (6) having a second sealing surface (14b) that surrounds its second outlet opening (10b), which second sealing surface is in the form of a cone (7), the first (14a) and the second sealing surface (14b) being formed complementarily to one another and being arranged such that they interact in the manner of a seal (16), and such that the thickening (12) plunges at least partially into the cone (7),
- the thickening (12) having a first support surface (18a) which points away from the first outlet opening (10a) and which projects radially over the end portion (8),
- the device (2) containing a clamping means (20) which engages onto the counter piece (6) and onto the first support surface (18a) such as to transfer force in order to press the pipeline (4) substantially in the axial direction with its first sealing surface (14a) against the second sealing surface (14b) of the counter piece (6),
**characterised in that**
the pipeline (4) and the counter piece (6) comprise a hydrogen gas, a resulting seal between the first (14a) and the second sealing surface (14b) being gastight and a loss of the sealing function being avoidable in interaction with very low temperatures and high pressures upon contact with the hydrogen gas by the first (14a) and the second sealing surface (14b) being made of metal, the choice of material for the device being matched to the hydrogen gas.

## Revendications

1. Utilisation d'un dispositif (2) pour connecter une conduite (4) à une contre pièce (6) pour transporter du gaz hydrogène, lequel dispositif (2) comprend un tronçon d'extrémité (8) de la conduite (4) et la contre pièce (6), dans laquelle
- la conduite (4) comprend dans son tronçon d'extrémité (8) un épaississement (12) qui est adjacent à un premier orifice de sortie (10a) de la conduite (4), lequel épaississement (12) est élargi en section transversale (dv) par rapport au reste du tronçon d'extrémité (8),
- l'épaississement (12) comprend une première surface d'étanchéité (14a) qui entoure le premier orifice de sortie (10a) et qui est sous la forme d'un tronc de cône ou d'un segment sphérique allant en se rétrécissant en direction du premier orifice de sortie (10a),
- la contre pièce (6) comprend une seconde surface d'étanchéité (14b) qui entoure un second orifice de sortie (10b) de celle-ci et qui est sous la forme d'un cône (7), dans laquelle la première (14a) et la seconde surface d'étanchéité (14b) sont conformées et agencées de façon complémentaire l'une par rapport à l'autre de telle façon qu'elles interagissent à la manière d'un joint d'étanchéité (16), et de telle façon que l'épaississement (12) soit au moins partiellement engagé dans le cône (7),
- l'épaississement (12) comprend une première surface d'appui (18a) qui s'étend à l'opposé du premier orifice de sortie (10a) et surmonte radialement le tronçon d'extrémité (8),
- le dispositif (2) comprend un moyen de serrage (20) dont la transmission de force agit sur la contre pièce (6) et sur la première surface d'appui (18a) afin de presser la conduite (4) dans une direction sensiblement axiale avec sa première surface d'étanchéité (14a) contre la seconde surface d'étanchéité (14b) de la contre pièce (6),
dans laquelle
une étanchéité qui en résulte entre la première (14a) et la seconde surface d'étanchéité (14b) est étanche au gaz et on peut éviter une perte de la fonction d'étanchéité lors de l'interaction de très basses températures et de hautes pressions en contact avec le gaz hydrogène par le fait que la première (14a) et la seconde surface d'étanchéité (14b) sont en métal, dans laquelle le choix de matériau pour le dispositif est adapté au gaz hydrogène.

2. Utilisation d'un dispositif (2) selon la revendication 1, dans lequel l'épaississement (12) est réalisé par déformation de la conduite (4).

3. Utilisation d'un dispositif (2) selon l'une quelconque des revendications précédentes, dans lequel la seconde surface d'étanchéité (14b) a la forme d'un tronc de cône ou d'un segment sphérique.

4. Utilisation d'un dispositif (2) selon l'une quelconque des revendications précédentes, dans lequel la première surface d'appui (18a) a la forme d'un tronc de cône ou d'un segment sphérique.

5. Utilisation d'un dispositif (2) selon l'une quelconque des revendications 1 à 4, dans lequel le moyen de serrage (20) est une pièce de serrage (22) d'une seule pièce qui transmet directement la force sur la contre pièce (6) et sur la première surface d'appui (18a).

6. Utilisation d'un dispositif (2) selon l'une quelconque des revendications 1 à 4, dans lequel
- le moyen de serrage (20) comprend une pièce de serrage (22) et un manchon d'écartement (40) ayant une seconde surface d'appui (18b) orientée vers la pièce de serrage (22),
- et la pièce de serrage (22) transmet la force sur la contre pièce (6) et sur la seconde surface d'appui (18b),
- et le manchon d'écartement (40) transmet la force sur la pièce de serrage (22) et sur la première surface d'appui (18a).

7. Utilisation d'un dispositif (2) selon la revendication 6, dans lequel la seconde surface d'appui (18b) a la forme d'un cône, d'un tronc de cône ou d'un segment sphérique.

8. Utilisation d'un dispositif (2) selon l'une quelconque des revendications précédentes, dans lequel
- le moyen de serrage (20) comprend, en tant que pièce de serrage (22), un écrou (24a) ou une vis à tête (24b) ayant une ouverture (42) qui traverse son tronçon d'extrémité (8),
- dans lequel une région (44) de la pièce de serrage (22) qui entoure l'ouverture (42) transmet la force à la première surface d'appui (18a),
- et la pièce de serrage (22) transmet la force sur la contre pièce (6) au moyen d'un filetage (29) qui est en prise sur un contre filetage (30) prévu sur la contre pièce (6).

9. Utilisation d'un dispositif (2) selon l'une quelconque des revendications 1 à 8, dans lequel
- la contre pièce (6) comprend un moyen d'engagement (32) sur lequel le moyen de serrage (20) vient en prise en transmission de force,
- et le moyen d'engagement (32) est réalisé d'une seule pièce avec la contre pièce (6).

10. Utilisation d'un dispositif (2) selon l'une quelconque des revendications 1 à 8, dans lequel
- la contre pièce (6) comprend un moyen d'engagement (32) sur lequel le moyen de serrage (20) vient en prise en transmission de force,
- et le moyen d'engagement (32) est rapporté sur la contre pièce (6), dans lequel la zone de jonction (36) est située à l'extérieur du passage médian (38) du dispositif (2).

11. Utilisation d'un dispositif (2) selon l'une quelconque des revendications précédentes, dans lequel
- la première (14a) et la seconde surface d'étanchéité (14b) sont formées de telle manière qu'un contact étanche est possible entre elles pour différents angles d'inclinaison (w) entre le tronçon d'extrémité (8) et la contre pièce (6),
- dans lequel le moyen de serrage (20) comprend une butée (48) pour le tronçon d'extrémité (8), l'angle possible d'inclinaison (w) étant limité par un angle maximal (wₘₐₓ).

12. Utilisation d'un dispositif (2) selon la revendication 11, dans lequel
- le moyen de serrage (20) comporte une ouverture (42) qui traverse le tronçon d'extrémité (8),
- dans lequel la butée (48) est formée par le bord de l'ouverture (42), et l'angle maximal (wₘₐₓ) est déterminé par la différence des dimensions de l'ouverture (42) et du tronçon d'extrémité (8).

13. Utilisation d'un dispositif (2) selon l'une quelconque des revendications précédentes, dans lequel
- la première surface d'étanchéité (14a) et la première surface d'appui (18a)
- et/ou éventuellement la première surface d'étanchéité (14a) et la seconde surface d'appui (18b)
- sont en forme de segment sphériques, et les centres (46) des segments sphériques coïncident.

14. Dispositif (2) pour connecter une conduite (4) à une contre pièce (6), lequel dispositif (2) comprend un tronçon d'extrémité (8) de la conduite (4) et la contre pièce (6), dans lequel
- la conduite (4) comprend dans son tronçon d'extrémité (8) un épaississement (12) qui est adjacent à un premier orifice de sortie (10a) de la conduite (4), lequel épaississement (12) est élargi en section transversale (dv) par rapport au reste du tronçon d'extrémité (8),
- l'épaississement (12) comprend une première surface d'étanchéité (14a) qui entoure le premier orifice de sortie (10a) et qui est sous la forme d'un tronc de cône ou d'un segment sphérique allant en se rétrécissant en direction du premier orifice de sortie (10a),
- la contre pièce (6) comprend une seconde surface d'étanchéité (14b) qui entoure un second orifice de sortie (10b) de celle-ci et qui est sous la forme d'un cône (7), dans laquelle la première (14a) et la seconde surface d'étanchéité (14b) sont conformées et agencées de façon complémentaire l'une par rapport à l'autre de telle façon qu'elles interagissent à la manière d'un joint d'étanchéité (16), et de telle façon que l'épaississement (12) soit au moins partiellement engagé dans le cône (7),
- l'épaississement (12) comprend une première surface d'appui (18a) qui s'étend à l'opposé du premier orifice de sortie (10a) et surmonte radialement le tronçon d'extrémité (8),
- le dispositif (2) comprend un moyen de serrage (20) dont la transmission de force agit sur la contre pièce (6) et sur la première surface d'appui (18a) afin de presser la conduite (4) dans une direction sensiblement axiale avec sa première surface d'étanchéité (14a) contre la seconde surface d'étanchéité (14b) de la contre pièce (6),
**caractérisé en ce que**
la conduite (4) et la contre pièce (6) contiennent un gaz hydrogène,
dans lequel une étanchéité qui en résulte entre la première (14a) et la seconde surface d'étanchéité (14b) est étanche au gaz et on peut éviter une perte de la fonction d'étanchéité lors de l'interaction de très basses températures et de hautes pressions en contact avec le gaz hydrogène par le fait que la première (14a) et la seconde surface d'étanchéité (14b) sont en métal, dans laquelle le choix de matériau pour le dispositif est adapté au gaz hydrogène.
